Europäisches Patentamt

European Patent Office

Office européen des brevets

(11) Publication number: **0 375 044 B1**

## EUROPEAN PATENT SPECIFICATION

(45) Date of publication of patent specification: **06.07.94**

(51) Int. Cl.⁵: **B09B 3/00**, C02F 11/00, C04B 18/04, A62D 3/00

(21) Application number: **89203202.0**

(22) Date of filing: **15.12.89**

(54) **Neutralizing process for toxic waste material.**

(30) Priority: **23.12.88 IT 2310688**

(43) Date of publication of application:
**27.06.90 Bulletin 90/26**

(45) Publication of the grant of the patent:
**06.07.94 Bulletin 94/27**

(84) Designated Contracting States:
**AT BE CH DE FR GB GR IT LI NL SE**

(73) Proprietor: **Bigelli, Fabrizio**
**Via A. Vivaldi, 15**
**Roma(IT)**

(72) Inventor: **Bigelli, Fabrizio**
**Via A. Vivaldi, 15**
**Roma(IT)**

(74) Representative: **de Pasquale, Carlo**
**Via Carlo Ravizza 53**
**I-20149 Milano (IT)**

Rank Xerox (UK) Business Services
(3.10/3.09/3.3.3)

## Description

The invention refers to a neutralizing process for toxic wastes.

This process can be applied to all possible types of toxic wastes.

One of the most serious problems afflicting industrialized countries and the human race in general, is that of the elimination of toxic wastes coming from industrial production and from the minds of water purificators, of industrial emissions and urban discharges.

There are many systems used to modify the physical and chemical characteristics of these toxic wastes to eliminate, or at least diminish the toxic level: for example, by incineration or pyrolysis; decyaniding; reduction of chromates etc.

Up to now, these methods have given partial results that is, the toxic reduction is rather low; it has a high effect on pollution due to the emission of toxic smoke in the air carrying residue ashes with a high percentage of heavy metals way above the admitted limits.

Another type of treatment known in the art is that known as stabilizing/solidification, so defined in that it tends to immobilize the toxic elements contained in the wastes transforming it into a solid mass of definite dimension and homogenous characteristics.

This treatment can today be applied to only a limited number of toxic substances and with poor results, as it is unable to obtain an irreversably undissolvable product. Moreover, the methods known to this day do not allow a reutilization of the neutralized product due to the fact that the resulting product is only partially neutralized and therefore destined to be dumped just the same, even though in dump yards of lower class respect to the one necessary for the product before neutralization.

The present invention refers to a neutralizing process for toxic wastes which can be considered as belonging to the last category of the above mentioned methods, but with a series of remarkable results never to this day obtained by other known methods.

A first valuable characteristic of the finding is that it can be applied to all types of toxic wastes, minds, ashes, liquids or other.

A second characteristic is that the process does not need heat and is very simple in that only a few operations are necessary, and the ingredients are inexpensive and become absolutely insignificant when compared to the high costs of other known methods.

A third characteristic is that very often the resulting product can be reutilized in numerous ways so that it does not add to the volumes of wastes to be dumped with its relative costs.

The product deriving from the process gives rise to a material which, though coming from soluble compounds, becomes irreversably undissolvable and strongly inactive to atmospheric agents, acid rain, salt erosion etc

To be underlined is also the fact that the analysis, as can be seen from the examples made on the eluted resulting from mud, ashes and toxic liquids, harmful and particular, treated with the proition: according to the finding and immersed in acetic acid at 0,5 Mole for 24hrs, have given values of toxic residues way below the limits accepted by table A of Law 319/74 "Legge Merli".

The process according to the invention consists in cold working and combining toxic wastes, muds, ashes or liquids, in proper proportions with Portland cement and a filler constituted by fine river sand or clay and adding a small quantity of a chemical compound constituted by:

| | |
|---|---|
| - Sodium carbonate ($Na_2CO_3$) | 10.5% |
| - Sodium chloride (NaCl) | 16.2% |
| - Potassium carbonate ($K_2CO_3$) | 11.7% |
| - Ferro chloride ($FeCl_3$) | 6.4% |
| - Aluminium chloride ($AlCl_3$) | 4.10% |
| - Magnesium chloride ($MgCl_2$) | 13.8% |
| - Potassium chloride (KCl) | 25.5% |
| - Calcium chloride ($CaCl_2$) | 5.3% |
| - Aluminium oxide ($Al_2O_3$) | 1.2% |
| - Calcium hydroxide Ca(HO)2 | 5.3% |

and being dissolved in water are all mixed together; to the blended compound is added more Portland cement and more chemical compound and they are intimately blended together to obtain a paste that can be either solidified by drying or used immediately for the preparation of manufactured material.

The invention will be better understood with the exposition of the basic process illustrated in the enclosed table containing the chart of the process and a series of examples of realization described for the purpose and wanting to exemplify and not limit in any way the characteristics of the process and its application to any kind of toxic waste.

The neutralizing mechanism which results according to the invention can be indicated with the following form:

**1 Precipitation.** The mixture Chemical compound-cement and its intimate blending with the waste, creates a notable increase of the concentration of $Ca^{++}$ ions and since the salts formed by the calcium together with the anions present are not very soluble, the outcome is the precipitation of said salts and so this becomes one of the solidifying mechanisms.

**2 Complexation.** In the condition of basic PH, simple hydrate compounds may give rise to an undissolvable complex (mainly aluminates) capable of binding through the chelating effect numerous anions of the halid type ($NO_3^-$ $MNO_4^-$ $Cn^-$ etc.)

**3 Absorbtion.** It has been noticed that the hydration of cement causes a remarkable increase in its specific surface which, in the presence of silica becomes particularly active due to absorbtion reactions. In conclusion, the outcome is that the toxic wastes treated with the process according to the invention become irreversably undissolvable. With this system two fundamental objectives are obtained: the waste is neutralized and can be reutilized.

Following is a detailed description of the sequence of the operations necessary to bring about the process of the invention , indicating the proportions with which the various components are added and the operation times, proportions and operation time used for the preparation of the various samples undergoing the following analysis which should be taken as being exemplifying and not limiting in any way.

The process consists in introducing in a mixer the various ingredients with the following proportions:

| | |
|---|---|
| - Toxic material | kg. 1,000 |
| - Filler (fine sand or clay) | kg. 600 |
| - Portland cement | kg. 250 |
| - Chemical compound | kg. 1 |
| dissoloved in water | |

mix all the ingredients for 15min so as to intimately blend the various components together.

Addition:

| | |
|---|---|
| - Portland Cement | kg. 250 |
| - Chemical compound | kg. 1 |
| dissolved in water | |

mix again for 15min.

After these simple operations, the neutralized product is poured out of the mixer as a rather dense paste ready to be transformed in a manufactured material or formed into homogenous blocks, capable of being ground and subsequently transformed.

The ratio in percentage of the various components waste material-cement-filler-Chemical compound above mentioned, and what it repeated, constitutes the basis of the finding and that it has been used to neutralize the products of the following examples, without considering their particular physical and chemical characteristics, condition and initial toxic level, both because it results to be the one that best suits most of the known toxic wastes and because it has only one reference parameter for a better definition of the finding.

It is evident that with due testing, it is possible to vary said percentage ratios according to the type and characteristics of the toxic waste (mud-ashes-liquids) to be treated.

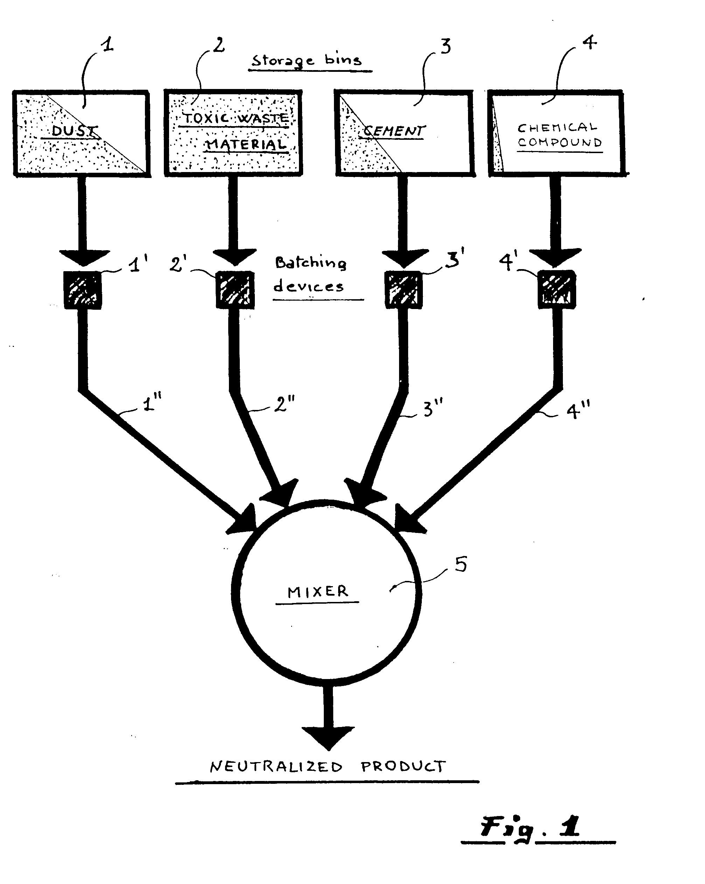

With reference to Fig.1 the equipment for the treatment of toxic wastes according to the invention is made up of a series of bins 1-2-3-4 capable of containing the various inert ingredients, toxic wast, cement and Chemical compound of dimensions which are proportional to the quantity of the various products to be used; at the delivery end are placed as many batching devices 1'-2'-3'-4', which through their respective conduits 1''-2''-3''-4'' deliver the products in a mixer 5 in which the intimate blending occurs, according to the instructions and timing indicated by the process.

On the basis of the process above described and maintaining as said the proportions of the various ingredients, toxic wastes - cement-filler-Chemical compound, we now describe a series of examples concerning the treatment of various types of toxic wastes with the process according to the invention and the results obtained as a result of tests carried out at an official laboratory (Laboratory of the Ecological section of the Town Council of Pietrasanta).

With the process according to the invention can be treated all types of toxic residues under any form: muds-ashes-liquids, and deriving from any field: industrial residues residues from organic and inorganic purification plants; residues deriving from solid urban wastes etc.

Analysis of the product resulting from the treatment of the toxic material with the process according to the finding consisted in a test effected by analyzing the eluted after the immersion of the product for 24hrs. in acetic acid at 0,5 Mole.

EXAMPLE N. 1

- Aluminous muds coming from a physical and chemical purification Analysis of the sample just as it is.
Alumina $(Al_2O_3)$80%
have been treated with the process according to the invention.
The resulting product has been immersed for 24hrs.in acetic acid at 0,5 Mole.
Analysis of the eluted:
Alumina: not detectable even in traces.

EXAMPLE N. 2

Muds coming from purificators of solid urban wastes.
Analysis of the sample just as it is:
Toxic organic substance 59%
Pb 157 mg/kg
have been treated with the process according to the invention.
The resulting product has been immersed
for 24hrs in acetic acid at 0,5 Mole.
Analysis of the eluted;
C.O.D.(Chemical Oxigen Demand) 0,00
Pb: O,10mg/lt.

EXAMPLE N.3

Muds coming from inorganic purification of electroplating industry.
Chemical analysis on the sample as it is

| | | |
|---|---|---|
| Pb | 136,5 | mg/kg |
| Cu | 97,7 | " " |
| Cd | 22,8 | " " |
| Zn | 16850,1 | " " |
| Ni | 2025,0 | " " |
| Cr | 2114,0 | " " |

have been treated with the process according to the invention.
The resulting product has been immersed in acetic acid for 24hrs. at 0,5 Mole.

Analysis of the eluted:

| PH | 5,1 | |
|----|-----|---|
| Pb | 0,07 | mg/lt |
| Cu | 0,004 | " " |
| Cd | 0,009 | " " |
| Zn | 0,45 | " " |
| Ni | 1,00 | " " |
| Cr | 0,05 | " " |

EXAMPLE N. 4

Slags coming from a foundry in the form of dust.
Chemical analysis on the sample as it is

| Fe | 70.000 | mg/kg |
|----|--------|-------|
| Pb | 83 | " " |
| Zn | 300 | " " |
| Cu | 33 | mg/kg |
| Cd | 10 | " " |
| Ni | 44 | " " |
| Cr | 11 | " " |

have been treated with the process according to the invention.
The resulting product has been immersed for 24hrs. in acetic acid at 0,5 Mole.

Analysis of the eluted:

| | | |
|---|---|---|
| Fe | 1,50 | mg/lt |
| Pb | 0,18 | " " |
| Zn | 0,40 | " " |
| Cu | 0,005 | " " |
| Cd | 0,001 | " " |
| Ni | 0,30 | " " |
| Cr | 0,02 | " " |

EXAMPLE N.5

Muds coming from the working of marble and granite analysis as it is

| | | |
|---|---|---|
| Pb | 77,0 | mg/kg |
| Cd | 5,1 | " " |
| Ni | 44,5 | " " |
| Zn | 156,9 | " " |
| Cu | 59,9 | " " |
| Cr | 28,5 | " " |

have been treated with the process according to the invention.
The resulting product has been immersed for 24hrs. in acetic acid at 0,5 Mole.

Analysis of the eluted:

```
PH      5,2

Pb    not detectable      ml/l

Cd    not detectable      "    "

Ni    0,03                "    "

Zn    0,07                "    "

Cu    not detectable      "    "

Cr    not detectable      "    "
```

EXAMPLE N. 6

Muds coming from the working of marble and granite 2/3 plus ashes deriving from incinerators for solid urban wastes 1/3

Analysis of the product as it is:

```
Pb    214,4      mg/kg

Cd      8,2      "    "

Ni     68,7      "    "

Zn    302,4      "    "

Cu     93,5      mg/kg

Cr     40,1      "    "
```

have been treated with the process according to the invention.

The resulting product has been immersed for 24hrs. in acetic acid at 0,5 Mole.

Analysis of the eluted:

```
PH        5,1

Pb        0,17      mg/lt

Cd        0,009      "    "

Ni        0,09       "    "

Zn        0,24       "    "

Cu        0,02       "    "

Cr        0,02       "    "
```

EXAMPLE N. 7

Ground slags of aluminium coming from foundries:
have been treated with the process according to the invention.
The resulting product has been immersed for 24hrs. in acetic acid at 0,5 Mole.
Analysis of the eluted:
Aluminium: not detectable

EXAMPLE N. 8

Tannery muds

Analysis of the product as it is

```
Humidity      55,5         %

Ashes         18,00        %

Phenols       18,2       ppm

Pb            31,5       mg/kg

Cu            57,00       "    "

Cr III   27,500,00        "    "

Cr Vl    not present       "    "

Cd             1,00        "    "


Zn            325,00      mg/kg
```

have been treated with the process according to the invention.

The resulting product has been immersed for 24hrs. in acetic acid at 0,5 Mole.

Analysis of the eluted:

| | | |
|---|---|---|
| Total chromium | 0.02 | mg/l |
| Lead | 0.01 | " |
| Zinc | 0.30 | " |
| Total Phenols | 0.10 | " |

To understand the level of neutralization of the process according to the patent, it is convenient to compare data given by the analysis of the eluted of the products after treatment with the analysis of the toxic materials in the begining and with those of Table A of Law 319/76 (legge Merli) indicating the allowed percentage of toxic substances:

| | | |
|---|---|---|
| Pb | 0,2 | mg/lt |
| Cd | 0,02 | " " |
| Ni | 2,00 | " " |
| Zn | 0,5 | mg/lt |
| Cu | 0,1 | " " |
| Cr | 0,2 | " " |

What results is that the toxic values of all the neutralized products with the process of the finding with reference to the examples exposed and which almost cover the wide range of toxic residues produced today in highest quantities are considerably lower than the limits Table A Law 319/76 considers non toxic and therefore admissible.

As established by the treatment of toxic wastes with the process of the present invention, the neutralized product comes out of the mixer as a dense paste that can be reutilized immediately at its plastic stage for the production of various manufactured material or dried in blocks.

The main field of reutilization of the neutralized product obtained with the process according to the invention, is the one making construction or building material. This product gives better results respect to a known equivalent product due to its physical - chemical characteristics and in particular to its high grade of inertia to atmospheric agents, acid rain and salt erosion. This, because the various components of the product resulting from the process are irreversibly undissolvable.

The material resulting from the process, in the form of a more or less plastic paste can be directly used for the making of:
- road foundations
- if resulting, for example, from toxic wastes of the working of marble and granite, even to form a wearing surface particularly resistant to abrasion and aggressive atmospheric agents.
- bearing blocks -bricks-tiles-marble plates etc.;
- foundation blocks;
- containing walls;
- breakwater masses;

The material produced in blocks of various size and subsequently ground, can be used as:
- road foundations;
- relief and ballast;

- ballast for rail tracks,
- and in general for various types of uses considering the physical-chemical characteristics of the product obtained after the neutralizing operation according to the characteristics of the toxic product before treatment which, after due testing has demonstrated not only the praised quality of inertia to aggressive agents, but also a high grade of resistance and hardness to compression and traction.

**Claims**

1. Process for the neutralization of toxic wastes, characterized by the fact that, the toxic wastes together with Portland cement, a filler constituted by fine river sand, or clay and with the addition of a chemical compound constituted by:

| | |
|---|---|
| - Sodium carbonate ($Na_2CO_3$) | 10.5% |
| - Sodium chloride (NaCl) | 16.2% |
| - Potassium carbonate ($K_2CO_3$) | 11.7% |
| - Ferro chloride ($FeCl_3$) | 6.4% |
| - Aluminium chloride ($AlCl_3$) | 4.10% |
| - Magnesium chloride ($MgCl_2$) | 13.8% |
| - Potassium chloride (KCl) | 25.5% |
| - Calcium chloride ($CaCl_2$) | 5.3% |
| - Aluminium oxide ($Al_2O_3$) | 1.2% |
| - Calcium hydroxide Ca(HO)2 | 5.3% |

and being dissolved in water are all mixed together; to the blended compound is added more Portland cement and more chemical compound and they are intimately blended together to obtain a paste that can be either solidified by drying or used immediately for the preparation of manufactured material.

2. Process according to Claims 1, characterized by the fact that, it is realized introducing into a mixer 1,000kg. of toxic material, 600kg.filler constituted by fine sand or clay, 250kg. of Portland cement, 1kg. of Chemical compound dissolved in water and mixing the ingredients for 15min.; adding 250kg Portland cement and 1 kg of Chemical compound dissolved in water and mixing again for 15 min. after this operation the product is neutralized and comes out in the form of dense paste, ready to be transformed into manufactured material or dried into blocks.

3. Use of the product obtained by the process according to Claim 1 and consisting in a dense paste for the production of material for construction works, such as for the making of road foundations, road wearing surfaces, bearing blocks, bricks, tiles, marble plates, foundation blocks, containing walls, breakwater masses and other building material.

4. Use of the product obtained by the process according to Claim 1, dried for the production of blocks and crushed to be used as inert material for road foundations, reliefs and ballasts,ballasts for rail tracks.

**Patentansprüche**

1. Verfahren zur Neutralisierung von Giftabfällen, dadurch gekennzeichnet, daß genannte Giftabfälle mit Portland Zement, einem Füllstoff aus feinem Flußsand oder Tonerde und mit einer chemischen Verbindung folgender Zusammensetzung:

| - Natriumkarbonat (Na2CO3) | 10,5% |
|---|---|
| - Natriumchlorid (NaCl) | 16,2% |
| - Kaliumkarbonat (K2CO3) | 11,7% |
| - Eisenchlorid (FeCl3) | 6,4% |
| - Aluminiumchlorid (AlCl3) | 4,1% |
| - Magnesiumchlorid (MgCl2) | 13,8% |
| - Kaliumchlorid (KCl) | 25,5% |
| - Kalziumchlorid (CaCl2) | 5,3% |
| - Aluminiumoxid (Al2O3) | 1,2% |
| - Kalziumhydroxid Ca(HO)2 | 5,3% |

in Wasserlösung vermengt werden, wobei die Mischung nach einer weiteren Zugabe von Portland Zement und chemischer Verbindung zu einem pastenförmigen Gemenge angerührt wird, das durch Trocknung verfestigt bzw. sofort in der Herstellung anderer Erzeugnisse verwendet werden kann.

2. Verfahren nach Patentanspruch 1, dadurch gekennzeichnet, daß hierbei 1.000 kg Giftabfälle, 600 kg Füllstoff aus feinem Flußsand oder Tonerde, 250 kg Portland Zement und 1 kg in Wasser gelöste chemische Verbindung in einem Mixer etwa 15 Minuten lang vermengt werden, diese Mischung nach Zugabe von 250 kg Portland Zement und 1 kg wassergelöster chemischer Verbindung weitere 15 Minuten verrührt wird. Die Giftabfälle sind somit neutralisiert und erscheinen in Form einer dickflüssigen Paste, die sich zu Erzeugnissen weiterverarbeiten bzw. in Blöcken trocknen läßt.

3. Anwendung des nach dem Verfahren von Patentanspruch 1 in dickflüssiger Pastenform erhaltenen Neutralproduktes bei der Herstellung von Baustoffen, beispielsweise für Straßenunterbau und -Decke, Strukturblöcke, Ziegelsteine, Fliesen, Marmorplatten, Fundamentblöcke, Mauern, Wasserdämme und für anderen Einsatz.

4. Anwendung des nach dem Verfahren von Patentanspruch 1 in getrockneter Form erhaltenen Neutralproduktes bei der Herstellung von Blöcken bzw. in gemahlener Form als Zuschlagstoff für Straßenbau, Aufschüttungen, Kies und Schotter.

## Revendications

1. Procédé pour la neutralisation des déchets toxiques, caractérisé par le fait que, les déchets toxiques mélangés au ciment Portland, une matière constituée de sable de cours d'eau fin, ou d'argile et additionnée d'un composé chimique se constituant de:

| - carbonate de sodium (Na CO) | 10,5% |
|---|---|
| - chlorure de sodium (NaCl) | 16,2% |
| - carbonate de potassium (K CO) | 11,7% |
| - chlorure de fer (FeCl) | 6,4% |
| - chlorure d'aluminium (AlCl) | 4,1% |
| - chlorure de magnesium (MgCl) | 13,8% |
| - Chlorure de potassium (KCl) | 25,5% |
| - Chlorure de calcium (CaCl) | 5,3% |
| - Oxyde d'aluminium (Al O) | 1,2% |
| - Hydroxyde de calcium Ca(HO)2 | 5,3% |

et étant dissout dans l'eau sont tous mélangés; au combiné mélangé s'ajoute plus de Portland et plus de combiné chimique et ils sont intimement mélangés de façon à obtenir une pâte qui peut être soit solidifiée par séchage soit utilisée immédiatement pour la préparation du matériel manufacturé.

2. Procédé qui selon les Revendications 1, est caractérisé par le fait que, il est réalisé par l'introduction dans un mélangeur 1.000 Kg de matières toxiques, 600 Kg de matières composées de sable fin ou d'argile, 250 Kg de ciment Portland, 1 Kg de combiné chimique dissout dans de l'eau et en mélangeant les éléments pendant 15 minutes; en ajoutant 250 Kg de ciment Portland et un Kg de combiné chimique dissout dans de l'eau et mélangé encore pendant 15 minutes, après cette opération, le produit est neutralisé et prend la forme d'une pâte épaisse, prête à être transformée en produit manufacturé et séché en blocs.

3. Utilisation du produit obtenu par le procédé dans l'observance de la Revendication 1 et se présentant sous la forme d'une pâte épaisse pour la production de matériel de construction, tel celui qui sert de base à la construction de routes, superficies de routes, blocs porteurs, briques, tuiles, plateaux de marbre, blocs de fondation, murs pleins, blocs pour môles et autres matériaux de construction.

4. Utilisation de produit obtenu par le procédé dans l'observance de la Revendication 1, séché pour la production de blocs et broyé pour être utilisé comme matériel inerte pour les fondations des routes, les monticules et les empierrements, les empierrements des voies de chemin de fer.

*Fig. 1*